# EUROPÄISCHE PATENTSCHRIFT

(11) **EP 3 440 251 B1**
(45) Veröffentlichungstag und Bekanntmachung des Hinweises auf die Patenterteilung: **28.10.2020**
(21) Anmeldenummer: 17717419.0
(22) Anmeldetag: 13.04.2017
(51) Int. Cl.: D03D 3/00

(54) **KABELWICKELBAND**
CABLE WRAPPING TAPE
BANDE DE GAINAGE DE CÂBLE

(30) Priorität: 20.05.2016 DE 202016102701 U
(43) Veröffentlichungstag der Anmeldung: 13.02.2019
(73) Patentinhaber: certoplast Technische Klebebänder GmbH, 42285 Wuppertal (DE)
(72) Erfinder: LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2017/058898
(87) Internationale Veröffentlichungsnummer: WO 2017/198398

(56) Entgegenhaltungen:
- EP-A1- 2 322 385
- EP-A1- 2 937 393

## Beschreibung

Die Erfindung betrifft ein Kabelwickelband, insbesondere zum Umwickeln von Kabeln in Automobilen, mit einem bandförmigen Träger, und mit einer Klebebeschichtung auf zumindest einer Seite des Trägers, wobei der Träger aus einer einzigen Gewebeschicht besteht, wobei ferner die Kettfäden und die Schussfäden des Trägers eine unterschiedliche Feinheit aufweisen, und wobei die Schussfäden eine Feinheit von mehr als 200 dtex und die Kettfäden eine Feinheit von 40 dtex bis 100 dtex besitzen.

Wie üblich bezeichnen Kettfäden bei dem eingesetzten Gewebe als Träger diejenigen Fäden, die beim Webvorgang in Längsrichtung aufgespannt werden und im fertigen Gewebe parallel zur Webkante verlaufen. Demgegenüber handelt es sich bei den Schussfäden um die Querfäden, welche quer zu den Längsfäden bzw. Kettfäden und folglich auch quer zur Webkante orientiert sind.

Bei einem Kabelwickelband des eingangs beschriebenen Aufbaus entsprechend der DE 600 31 332 T2 geht es primär darum, die Reißfestigkeit in Querrichtung auf Werte von weniger als 10 N/cm einzustellen, so dass sich das bekannte Kabelwickelband problemlos von Hand einreißen lässt. Die sogenannte Handeinreißbarkeit ist für die Verarbeitung des Kabelwickelbandes beim Umwickeln von Kabeln in Automobilen von besonderer Bedeutung, weil ansonsten beispielsweise Messer oder andere Schneideinrichtungen erforderlich sind und den Wickelvorgang verzögern.

Um die Handeinreißbarkeit bzw. Quereinreißbarkeit zu gewährleisten, und die gewünschten geringen Querreißkräfte zu realisieren, wird bei der bekannten Lehre nach der DE 600 31 332 T2 mit einem Titer der Längsfäden bzw. Kettfäden zwischen 40 und 60 dtex gearbeitet. Der Titer der Querfäden bzw. der Schussfäden ist auf Werte zwischen 150 und 250 dtex beschränkt. Dadurch wird zwar insgesamt die gewünschte Handeinreißbarkeit zur Verfügung gestellt und werden die geforderten geringen Querreißkräfte beobachtet. Das geht allerdings einher mit einer relativ geringen Abriebfestigkeit.

Beim nächstliegenden Stand der Technik nach der EP 2 322 385 A1 wird überwiegend mit einem Gewebeträger aus Polyesterkettfäden und Polyamidschussfäden gearbeitet. Dadurch kann insgesamt eine gute Verbundfestigkeit des Gewebes ohne zusätzliche Fixierungsmaßnahmen der Kett- und Schussfäden erreicht werden. Außerdem wird eine gute Handeinreißbarkeit beobachtet und eine Abriebbeständigkeit gemäß den Klassen C oder D nach LV 312. Allerdings führt der materialverschiedene Aufbau des bekannten Gewebeträgers unter Umständen dazu, dass eine etwaige Wiederverwertung problematisch ist. Hinzu kommt, dass die Kettfäden bzw. der gebildete Gewebeträger nicht unter allen Umständen und durchweg handeinreißbar ist, sodass zusätzliche Maßnahmen zu ihrer Steigerung angesprochen werden.

Tatsächlich spielt bei solchen Kabelwickelbändern zum Umwickeln von Kabeln in Automobilen nicht nur die zuvor bereits beschriebene Handeinreißbarkeit neben der erforderlichen Temperatur- und Medienbeständigkeit eine besondere Rolle. Sondern aktuell und zunehmend wird eine erhöhte Abriebbeständigkeit gefordert. Das lässt sich primär darauf zurückführen, dass die mit Hilfe solcher Kabelwickelbänder ummantelten Kabel respektive Kabelbäume eine in aktuellen Autormobilen enge und gedrängte Verlegung erfahren. Dadurch steigen die Anforderungen an einen Scheuerschutz und folglich die Beständigkeit der Kabelwickelbänder gegenüber Scheuerbewegungen und insbesondere Abrieb.

Zu Klassifizierung der Abriebbeständigkeit von Kabelwickelbändern wird auf Normen zurückgegriffen, die typischerweise von der Automobilindustrie vorgegeben werden. Das prominenteste Beispiel hierfür ist die Norm LV 312-1 "Klebebänder für Kabelsätze in Kraftfahrzeugen" (2009) als gemeinsame Prüfrichtlinie der Firmen Audi, BMW, Daimler Benz und VW. Tatsächlich wird im Rahmen der vorgenannten Norm LV 312-1 die Abriebbeständigkeit in Anlehnung an DIN ISO 622 derart bestimmt, dass das zu untersuchende Klebeband zunächst auf einen Dorn bzw. Metallstab mit 5 mm Durchmesser aufgeklebt wird. Mit einem Schabwerkzeug eines Nadeldurchmessers von 0,45 mm wird dann unter Berücksichtigung einer aufgebrachten Gewichtskraft von 7 N die Anzahl der Hübe bestimmt, die erforderlich ist, um das Klebeband durchzuscheuern. Je größer die Anzahl der Hübe, desto abriebbeständiger ist das fragliche Klebeband ausgelegt.

Man unterscheidet in der Praxis zwischen der Abriebklasse A, die praktisch keinen Abriebschutz bietet, weil die Anzahl der Hübe weniger als 100 beträgt, bis zur Klasse E, die einen hohen Abriebschutz zur Verfügung stellt. Hierzu korrespondiert eine Anzahl an Hüben von 5000 und mehr, bis das fragliche Klebeband unter Berücksichtigung des zuvor beschriebenen Scheuerversuches durchgescheuert ist.

Im weiteren Stand der Technik nach der EP 1 911 633 B1 wird die Abriebbeständigkeit ebenso wie die einzelnen Normen im Detail beschrieben und vorgestellt. Hierauf sei ausdrücklich Bezug genommen. Bei dem an dieser Stelle eingesetzten Kabelwickelband handelt es sich um ein solches, bei dem der Träger ebenfalls aus einer einzigen Gewebeschicht besteht und zusätzlich auf ein aus Polyamidwerkstoff gebildetes Garn zurückgegriffen wird. Die einzelnen Fäden des Garns verfügen über eine Fadenstärke bzw. Garnstärke von mindestens 280 dtex. Dadurch soll insgesamt die Abriebklasse E entsprechend der Norm LV 312 erfüllt werden.

Der Rückgriff auf Polyamidfäden bzw. Polyamidgarne im Rahmen der bekannten Lehre nach der EP 1 911 633 B1 erhöht zwar wunschgemäß den Abriebschutz und steigert die Abriebbeständigkeit, wie die erreichte Abriebklasse E deutlich macht. Allerdings sind die Herstellungskosten für ein solches Gewebe hoch, weil auf kostenintensive Polyamidfäden zurückgegriffen wird. Hinzu kommt, dass die in diesem Zusammenhang eingesetzten Garnstärken von mindestens 280 dtex in der Kette und im Schuss dazu führen, dass das bekannte Kabelwickelband überhaupt nicht von Hand eingerissen werden kann, sondern vielmehr im Zuge eines Wickelvorgangs aufwendig auf die gewünschte Länge geschnitten werden muss. Hier setzt die Erfindung ein.

Der Erfindung liegt das technische Problem zugrunde, ein Kabelwickelband des eingangs beschriebenen Aufbaus so weiter zu entwickeln, dass die an sich widerstreitenden Anforderungen von einerseits Abriebbeständigkeit und andererseits Handeinreißbarkeit gleichzeitig erfüllt werden.

Zur Lösung dieser technischen Problemstellung ist ein gattungsgemäßes Kabelwickelband im Rahmen der Erfindung dadurch gekennzeichnet, dass die Kettfäden und die als materialeinheitliche Kunststofffäden aus insbesondere Polyester ausgebildet sind, und dass die Schussfäden hochzugfest ausgelegt sind und eine feinheitsbezogene Höchstzugkraft von mehr als 5 cN/dtex sowie die Kettfäden eine feinheitsbezogene Höchstzugkraft von 3,4 cN/dtex im Maximum aufweisen. D.h., die hochzugfeste Auslegung der eingesetzten Schussfäden korrespondiert dazu, dass ihre feinheitsbezogene Höchstzugkraft bzw. die sogenannte Feinheitsfestigkeit Werte von mehr 5 cN/dtex beträgt. Bevorzugt liegt die feinheitsbezogene Höchstzugkraft bei mehr als 8 cN/dtex und erreicht im allgemeinen Werte bis zu 20 cN/dtex. Die Messung der Höchstzugkraft erfolgt in diesem Zusammenhang jeweils entsprechend den Vorgaben in der DIN EN ISO 2062.

D.h., die feinheitsbezogene Höchstzugkraft beträgt 0,05 N/dtex bzw. 0,08 N/dtex bis in etwa 0,2 N/dtex. Hieraus ergibt sich, dass bei einer Fadenstärke bzw. Garnstärke des betreffenden Schussfadens von 1 dtex der fragliche Schussfaden eine Höchstzugkraft von 5 cN bzw. 0,05 N im Minimum aufweist. Da die eingesetzten Schussfäden im Rahmen der Erfindung üblicherweise eine Faden- bzw. Garnstärke (Feinheit) von wenigstens 200 dtex aufweisen, ergibt sich hieraus, dass jeder einzelne Schussfaden mit einer Höchstzugkraft von mehr als 10 N ausgerüstet ist (0,05 N x 200).

Wenn man in diesem Zusammenhang zusätzlich noch berücksichtigt, dass vorzugsweise die Anzahl der Schussfäden im Gewebe des Trägers im Bereich von 10/cm bis 30/cm angesiedelt ist, so resultiert hieraus eine breitenbezogene Reißfestigkeit in Schussrichtung von 100 N/cm bis 300 N/cm und mehr. Denn selbstverständlich lassen sich auch noch höhere Reißfestigkeiten darstellen, nämlich dann, wenn mit Schussfäden einer höheren Feinheit als 200 dtex gearbeitet wird.

Tatsächlich kann die Feinheit der Schussfäden nämlich bei mehr als 250 dtex liegen. Insbesondere wird für die Feinheit der Schussfäden ein Wert von 280 dtex und vorzugsweise von 350 dtex und mehr beobachtet. Ganz besonders bevorzugt können die Schussfäden mit einer Feinheit von mehr als 400 dtex und nach weiter bevorzugter Ausführungsform von 470 dtex und mehr ausgerüstet sein. Außerdem hat es sich in diesem Zusammenhang insgesamt bewährt, die Feinheit des jeweiligen Schussfadens auf maximal 700 dtex zu begrenzen. Das gilt natürlich nicht einschränkend.

Jedenfalls verfügen die Schussfäden über eine hohe Reißfestigkeit und wird darüber hinaus in Schussrichtung des Gewebes für den Träger des erfindungsgemäßen Kabelwickelbandes eine breitenbezogene Reißfestigkeit von im Minimum 100 N/cm beobachtet, wobei typischerweise Werte von 300 N/cm und noch viel mehr beobachtet werden. Auf diese Weise tragen die "dicken" Schussfäden dazu bei, die vom erfindungsgemäßen Kabelwickelband geforderte Abriebfestigkeit zu gewährleisten und einzustellen. Tatsächlich werden an dieser Stelle Abriebbeständigkeiten wenigstens der Abriebklasse C beobachtet, und zwar an einem Dorn mit 5 mm Durchmesser gemäß der zuvor bereits angesprochenen Norm LV 312-1 (2009).

Diese erhöhte Abriebbeständigkeit zumindest der Abriebklasse C wird mit Hilfe des erfindungsgemäßen Kabelwickelbandes unter gleichzeitiger Wahrung der Handeinreißbarkeit erreicht. Das lässt sich im Kern darauf zurückführen, dass die Kettfäden im Unterschied zu den Schussfäden eine feinheitsbezogene Höchstzugkraft von 3,5 cN/dtex im Maximum aufweisen. Außerdem ist die Feinheit der Kettfäden im Bereich von 40 dtex bis 100 dtex angesiedelt.

Geht man von der Höchstgrenze für die feinheitsbezogene Höchstzugkraft von 3,5 cN/dtex entsprechend 0,035 N/dtex aus, so bemisst sich die mit einem solchen Kettfaden darstellbare Höchstzugkraft auf Werte von lediglich 1,4 N (0,035 N/dtex x 40 dtex) bis 3,5 N (0,035 N/dtex x 100 dtex). Diese Höchstzugkraft der Kettfäden ist deutlich geringer als diejenige der Schussfäden bemessen. Sofern nach vorteilhafter Ausgestaltung die Anzahl der Kettfäden im Gewebe des Trägers im Bereich von 15 bis 60/cm angesiedelt ist, resultiert hieraus eine längenbezogene Höchstzugkraft von 21 N/cm bis 210 N/cm.

Grundsätzlich lassen sich auch noch geringere Werte als 21 N/cm beobachten und einstellen, weil bei der Berechnung dieses Wertes von der Obergrenze für die feinheitsbezogene Höchstzugkraft des jeweiligen Kettfadens von 3,5 cN/dtex ausgegangen worden ist. Legt man hier beispielsweise eine feinheitsbezogene Höchstzugkraft von 2 cN/dtex im Maximum für den jeweiligen Kettfaden zugrunde und geht darüber hinaus von einer Feinheit des Kettfadens von 40 dtex sowie 15 Fäden/cm im Gewebe des Trägers aus, so bemisst sich die Höchstzugkraft für jeden Kettfaden zu lediglich 0,8 N. Bei Zugrundelegung von 15 Kettfäden/cm im Gewebe des Trägers folgt hieraus eine längenbezogene Höchstzugkraft von lediglich 12 N/cm. Derartige Werte sind als handeinreißbar in Querrichtung zu betrachten, weil bei einer solchen Handeinreißung in Querrichtung die Kettfäden praktisch solange gedehnt werden, bis die Höchstzugkraft überschritten worden ist und folglich die Kettfäden wunschgemäß reißen.

Im Idealfall sorgen in diesem Kontext die Schussfäden gegebenenfalls in Verbindung mit der Klebebeschichtung primär dafür, dass die Kettfäden bei dem Reißvorgang nicht gegeneinander verschoben werden und tatsächlich die zuvor angegebenen Werte für die Höchstzugkräfte beobachtet werden. Diese können dann nämlich mit den entsprechenden Kräften bzw. Querreißkräften identifiziert werden, wie sie auch im Rahmen des Standes der Technik nach der DE 600 31 332 T2 untersucht worden sind.

Jedenfalls werden im Rahmen der Erfindung Querreißkräfte von regelmäßig weniger als 20 N/cm und folglich auch entsprechende längenbezogene Höchstzugkräfte für die Kettfäden von weniger als 20 N/cm insgesamt als (noch) handeinreißbar betrachtet. Folgerichtig kombiniert das erfindungsgemäße Kabelwickelband zum ersten Mal einerseits die erforderliche Handeinreißbarkeit zur einfachen Verarbeitung beim Umwickeln von Kabeln in Automobilen mit andererseits der im verarbeiteten Zustand geforderten Abriebbeständigkeit. Denn typischerweise reichen hier die Werte für die erreichte Abriebklasse C aus. Hierin sind die wesentlichen Vorteile zu sehen.
Erfindungsgemäß sind die Kettfäden und die Schussfäden als materialeinheitliche Kunststofffäden ausgebildet. In diesem Fall wird man mit den beschriebenen hochzugfesten Schussfäden mit der geforderten feinheitsbezogenen Höchstzugkraft von mehr als 5 cN/dtex einerseits und gleichsam Standardpolyesterfäden als Kettfäden andererseits arbeiten. Denn solche Standardpolyesterfäden als Kettfäden kommen typischerweise mit einer feinheitsbezogenen Höchstzugkraft von weniger als 3, 5 cN/dtex im Maximum aus.

Da zugleich die Schussfäden deutlich "dicker" als die Kettfäden gestaltet sind, nämlich eine Feinheit im Bereich von 200 dtex bis maximal 700 dtex aufweisen, wohingegen die Kettfäden mit einer Feinheit im Bereich von 40 dtex bis 100 dtex ausgerüstet sind, erklärt sich zugleich die auf diese Weise erreichbare Abriebklasse C im Minimum. Diese wird bei Anwendung der zuvor bereits angesprochenen Norm LV 312-1 an einem Dorn mit 5 mm Durchmesser beobachtet und stellt sich ein.

Der aus der einzigen Gewebeschicht bestehende bzw. aufgebaute Träger ist im allgemeinen mit einer Dicke von maximal 0,5 mm ausgerüstet. Meistens liegt die Dicke im Bereich von 0,2 mm bis 0,5 mm. Außerdem verfügt der fragliche und aus der einzigen Gewebeschicht aufgebaute Träger typischerweise über ein Flächengewicht, welches im Bereich von 100 g/m² bis 250 g/m² angesiedelt ist. Wie zuvor bereits ausgeführt, bewegt sich die Anzahl der Schussfäden im Gewebe des Trägers im Bereich von 10/cm bis 30/cm. Die Anzahl der Kettfäden kann demgegenüber geringfügig darüber angesiedelt sein. Tatsächlich wird man hier mit einer Anzahl von Kettfäden im Gewebe des Trägers im Bereich von 15/cm bis 60/cm arbeiten.

Als geeignete Klebebeschichtung empfiehlt sich eine solche auf Basis eines Haftklebstoffes, der insgesamt eine selbstklebende Klebebeschichtung zur Verfügung stellt. In diesem Zusammenhang haben sich typischerweise Acrylatklebstoffe als besonders günstig erwiesen und hier insbesondere solche, die UV-vernetzbar ausgebildet sind. Der fragliche Haftklebstoff bzw. die Klebebeschichtung wird auf dem bandförmigen Träger im allgemeinen mit einem spezifischen Flächengewicht im Bereich von 50 g/m² bis 200 g/m² aufgetragen.

Die hohe Abriebbeständigkeit wird im Kern durch den Rückgriff auf die hochzugfesten Schussfäden zurückgeführt. Denn die Schussfäden sind einerseits mit einer Feinheit von mehr als 200 dtex und andererseits mit einer feinheitsbezogenen Höchstzugkraft von mehr als 5 cN/dtex ausgerüstet. Auf diese Weise lässt sich das erfindungsgemäße Kabelwickelband bereits besonders abriebbeständig auslegen, selbst dann, wenn auf StandardPolyesterfäden als Kettfäden zurückgegriffen wird. Um die fraglichen hochzugfesten Schussfäden bzw. Polyesterfäden zur Verfügung zu stellen, werden diese im Allgemeinen verstreckt und thermofixiert. Als Folge hiervon beobachtet man eine ausgeprägte Parallelorientierung der einzelnen Polyesterlinearmoleküle. Die Parallelorientierung kann Werte von 90% und mehr erreichen. Außerdem werden Kristallinitätsgrade von bis zu 80% beobachtet. Das alles führt dazu, dass die Abriebbeständigkeit mindestens der Abriebklasse C beobachtet und zugleich das erfindungsgemäße Kabelwickelband dennoch handeinreißbar ausgestaltet ist.

Durch den Rückgriff auf unterschiedliche Polyesterfäden in Kette und in Schuss ist das Kabelwickelband darüber hinaus medien- und temperaturbeständig ausgelegt, lässt sich leicht einfärben und mit dem Klebstoff beschichten. Auch eine auf der gegenüberliegenden Seite der Klebstoffbeschichtung vorgenommene weitere Beschichtung oder der Rückgriff auf einen glattgeschliffenen Träger sind unschwer möglich. Das alles gelingt unter Berücksichtigung minimierter Herstellungskosten im Vergleich zum Stand der Technik. Hierin sind die wesentlichen Vorteile zu sehen.

## Patentansprüche

1. Kabelwickelband, insbesondere zum Umwickeln von Kabeln in Automobilen, mit einem bandförmigen Träger, und mit einer Klebebeschichtung auf zumindest einer Seite des Trägers, wobei der Träger aus einer einzigen Gewebeschicht besteht, wobei ferner die Kettfäden und die Schussfäden des Trägers eine unterschiedliche Feinheit aufweisen, und wobei die Schussfäden eine Feinheit von mehr als 200 dtex und die Kettfäden eine Feinheit von 40 dtex bis 100 dtex besitzen, **dadurch gekennzeichnet, dass**
- die Kettfäden und die Schussfäden als materialeinheitliche Kunststofffäden aus insbesondere Polyester ausgebildet sind, und dass
- die Schussfäden hochzugfest ausgelegt sind und eine feinheitsbezogene Höchstzugkraft von mehr als 5 cN/dtex sowie
- die Kettfäden eine feinheitsbezogene Höchstzugkraft von 3,5 cN/dtex im Maximum aufweisen.

2. Kabelwickelband nach Anspruch 1, **dadurch gekennzeichnet, dass** die Kettfäden eine feinheitsbezogene Höchstzugkraft von 2 cN/dtex im Maximum aufweisen.

3. Kabelwickelband nach Anspruch 1 oder 2, **dadurch gekennzeichnet, dass** die Schussfäden eine Feinheit von mehr als 250 dtex, insbesondere von mehr als 280 dtex, vorzugsweise von mehr als 350 dtex und ganz besonders bevorzugt eine Feinheit von mehr als 470 dtex aufweisen.

4. Kabelwickelband nach einem der Ansprüche 1 bis 3, **dadurch gekennzeichnet, dass** die Schussfäden eine Feinheit von maximal 700 dtex besitzen.

5. Kabelwickelband nach einem der Ansprüche 1 bis 4, **dadurch gekennzeichnet, dass** der jeweilige Kunststofffaden aus mehr als 20 Filamenten gebildet ist.

6. Kabelwickelband nach Anspruch 5, **dadurch gekennzeichnet, dass** der jeweilige Faden aus mehr als 24 Filamenten besteht.

7. Kabelwickelband nach Anspruch 5 oder 6, **dadurch gekennzeichnet, dass** der jeweilige Faden aus weniger als 100 Filamenten und vorzugsweise zwischen 40 bis 96 Filamenten, gebildet ist.

8. Kabelwickelband nach einem der Ansprüche 1 bis 7, **dadurch gekennzeichnet, dass** an einem Dorn mit 5 mm Durchmesser wenigstens die Abriebklasse C erfüllt wird.

9. Kabelwickelband nach einem der Ansprüche 1 bis 8, **dadurch gekennzeichnet, dass** der Träger eine Dicke von maximal 0,5 mm, insbesondere eine Dicke im Bereich von 0,2 mm bis 0,5 mm, aufweist.

10. Kabelwickelband nach einem der Ansprüche 1 bis 9, **dadurch gekennzeichnet, dass** der Träger ein Flächengewicht von 100 g/m² bis 250 g/m² besitzt.

11. Kabelwickelband nach einem der Ansprüche 1 bis 10, **dadurch gekennzeichnet, dass** die Anzahl der Kettfäden im Gewebe des Trägers im Bereich von 15/cm bis 60/cm liegt.

12. Kabelwickelband nach einem der Ansprüche 1 bis 11, **dadurch gekennzeichnet, dass** die Anzahl der Schussfäden im Gewebe des Trägers im Bereich von 10/cm bis 30/cm angesiedelt ist.

## Claims

1. Cable wrapping tape, in particular for wrapping cables in motor vehicles, with a tape-like carrier and an adhesive coating on at least one side of the carrier, wherein the carrier consists of a single woven layer, wherein additionally the warp threads and the weft threads of the carrier are of different degrees of fineness, and wherein the weft threads have a fineness of more than 200 dtex, while the weft threads have a fineness of 40 dtex to 100 dtex, **characterized in that**
- the warp threads and the weft threads are in the form of materially uniform synthetic threads, particularly made from polyester, and that
- the weft threads are designed to have high tensile strength and have a fineness-related maximum tenacity of more than 5 cN/dtex, and
- the warp threads have a fineness-related maximum tenacity not exceeding 3.5 cN/dtex.

2. Cable wrapping according to Claim 1, **characterized in that** the warp threads have a fineness-related maximum tenacity not exceeding 2 cN/dtex.

3. Cable wrapping tape according to Claim 1 or 2, **characterized in that** the weft threads have a fineness of more than 250 dtex, in particular more than 280 dtex, preferably more than 350 dtex, and most particularly preferably a fineness of more than 470 dtex.

4. Cable wrapping tape according to any one of claims 1 to 3, **characterized in that** the weft threads have a fineness or not more than 700 dtex.

5. Cable wrapping tape according to any one of claims 1 to 4, **characterized in that** the respective synthetic thread is made up of more than 20 filaments.

6. Cable wrapping tape according to Claim 5, **characterized in that** the respective thread consists of more than 24 filaments.

7. Cable wrapping tape according to Claim 5 or 6, **characterized in that** the respective thread is made up of fewer than 100 filaments, and preferably between 40 and 96 filaments.

8. Cable wrapping tape according to any one of Claims 1 to 7, **characterized in that** at least the abrasion class C is fulfilled with a mandrel with diameter of 5 mm.

9. Cable wrapping tape according to any one of Claims 1 to 8, **characterized in that** the carrier has a thickness not exceeding 0.5 mm, in particular a thickness in the range from 0.2 mm to 0.5 mm.

10. Cable wrapping tape according to any one of Claims 1 to 9, **characterized in** the carrier has a fabric weight from 100 g/m² to 250 g/m².

11. Cable wrapping tape according to any one of Claims 1 to 10, **characterized in that** the number of warp threads in the fabric of the carrier is in the range from 15/cm to 60/cm.

12. Cable wrapping tape according to any one of Claims 1 to 11, **characterized in that** the number of weft threads in the fabric of the carrier is in the range from 10/cm to 30/cm.

## Revendications

1. Bande d'enroulement de câble, en particulier pour enrouler des câbles dans des automobiles, avec un support en forme de bande et avec un revêtement adhésif sur au moins un côté du support, sachant que le support est composé d'une couche de tissu unique, sachant en plus que les fils de chaîne et les fils de trame du support comportent une finesse différente et sachant que les fils de trame possèdent une finesse de plus de 200 dtex et les fils de chaîne une finesse de 40 dtex à 100 dtex, **caractérisée en ce que**
- les fils de chaîne et les fils de trame sont constitués de polyester spécial en tant que fils de plastique de matériau uniforme et **en ce que**
- les fils de trame sont conçus hautement résistants à la traction et comportent une résistance maximale à la traction en rapport avec la finesse de plus de 5 cN/dtex et
- les fils de chaîne, au maximum une résistance maximale à la traction en rapport avec la finesse de 3,5 cN/dtex.

2. Bande d'enroulement de câble selon la revendication 1, **caractérisée en ce que** les fils de chaîne comportent au maximum une résistance maximale à la traction en rapport avec la finesse de 2 cN/dtex.

3. Bande d'enroulement de câble selon la revendication 1 ou 2, **caractérisée en ce que** les fils de trame comportent une finesse de plus de 250 dtex, en particulier de plus de 280 dtex, de préférence de plus de 350 dtex et tout particulièrement de préférence une finesse de plus de 470 dtex.

4. Bande d'enroulement de câble selon l'une quelconque des revendications 1 à 3, **caractérisée en ce que** les fils de trame possèdent une finesse maximale de 700 dtex.

5. Bande d'enroulement de câble selon l'une quelconque des revendications 1 à 4, **caractérisée en ce que** le fil de plastique respectif est formé de plus de 20 filaments.

6. Bande d'enroulement de câble selon la revendication 5, **caractérisée en ce que** le fil respectif est composé de plus de 24 filaments.

7. Bande d'enroulement de câble selon la revendication 5 ou 6, **caractérisée en ce que** le fil respectif est formé de moins de 100 filaments et de préférence entre 40 à 96 filaments.

8. Bande d'enroulement de câble selon l'une quelconque des revendications 1 à 7, **caractérisée en ce qu'**au moins la catégorie d'abrasion C est satisfaite sur un mandrin de 5 mm de diamètre.

9. Bande d'enroulement de câble selon l'une quelconque des revendications 1 à 8, **caractérisée en ce que** le support comporte une épaisseur maximale de 0,5 mm, en particulier une épaisseur de l'ordre de 0,2 mm à 0,5 mm.

10. Bande d'enroulement de câble selon l'une quelconque des revendications 1 à 9, **caractérisée en ce que** le support possède un grammage de 100 g/m² à 250 g/m².

11. Bande d'enroulement de câble selon l'une quelconque des revendications 1 à 10, **caractérisée en ce que** le nombre de fils de chaîne dans le tissu du support se situe dans un ordre de 15/cm à 60/cm.

12. Bande d'enroulement de câble selon l'une quelconque des revendications 1 à 11, **caractérisée en ce que** le nombre de fils de trame dans le tissu du support est établi dans un ordre de 10/cm à 30/cm.
